# EUROPÄISCHE PATENTSCHRIFT

(11) **EP 1 455 012 B1**
(45) Veröffentlichungstag und Bekanntmachung des Hinweises auf die Patenterteilung: **25.10.2006**
(21) Anmeldenummer: 03009291.0
(22) Anmeldetag: 24.04.2003
(51) Int. Cl.: D06F 39/00

(54) **Abstandselement für ein Haushaltsgerät**
Spacer element for an appliance
Elément d'entretoise pour un appareil ménager

(30) Priorität: 09.07.2002 DE 10230781
(43) Veröffentlichungstag der Anmeldung: 08.09.2004
(73) Patentinhaber: Electrolux Home Products Corporation N.V., 1930 Zaventem (BE)
(72) Erfinder: Gerstacker, Heinrich, 90478 Nürnberg (DE)
(74) Vertreter: Baumgartl, Gerhard Willi

(56) Entgegenhaltungen:
- DE-U- 7 602 557
- DE-U- 29 511 249

## Beschreibung

Die Erfindung betrifft ein Distanzrohr zur Transportsicherung eines Haushaltsgerätes.

Zur Transportsicherung einer Waschmaschine ist es bekannt, zwischen dem schwingenden System und dem Gehäuse der Waschmaschine ein Distanzrohr einzusetzen An einem Ende des Distanzrohres wird eine Buchse aus Kunststoff eingesetzt, die einerseits die Kante an diesem Ende des Rohres abdeckt und so als Auflagefläche dient und andererseits eine Einführhilfe für Schraubbolzen aufweist. Dieses Distanzrohr verbindet einen Träger des Gehäuses und einen Waschmaschinenbottich als Teil des schwingenden Systems, wobei der Schraubbolzen in das Distanzrohr eingeführt und durch Verschrauben der Bottich am Gehäuseträger über das Distanzrohr gesichert wird. Für dieses Distanzrohr werden somit zwei Teile benötigt und ein zusätzlicher Arbeitsschritt ist erforderlich, um die Kunststoffbuchse ins Rohrende einzusetzen.

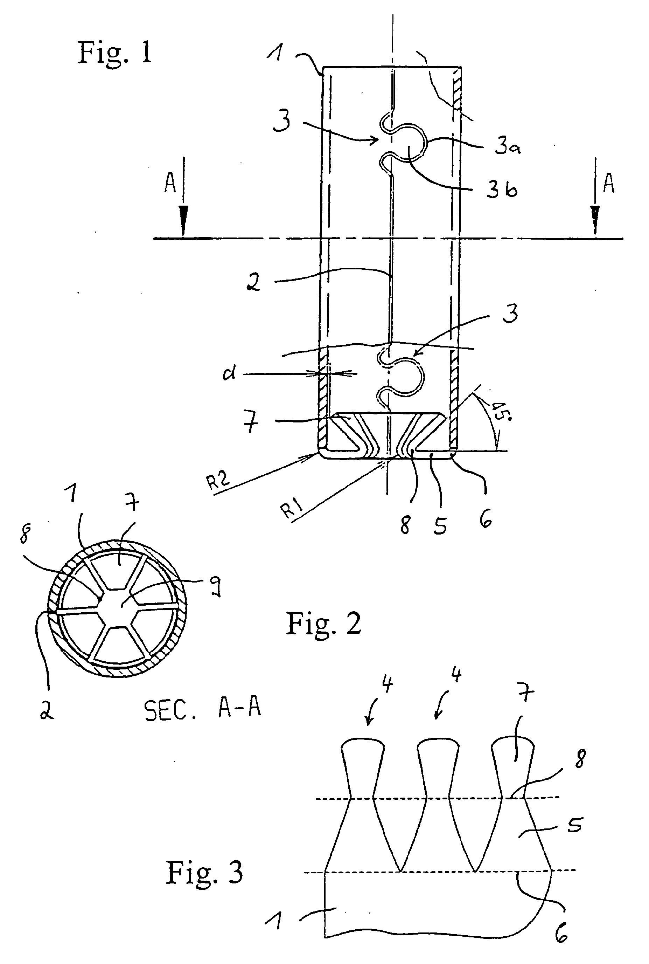

Aus der DE 76 02 557 U ist ein Distanzrohr zur Transportsicherung (Abb. 1) bekannt, mit einer zumindest teilweise umlaufenden Rohrwand (Abb. 7), bei dem zumindest an einem Ende die Rohrwand segmentweise unterbrochen ist. Das Segment (Abb. 4: (10, 9) ist zumindest teilweise zur Rohrachse hin gebogen. Es bildet am Rohrende eine Stirnfläche des Zylindermantels als Basis zur Anlage eines zu sichernden Elements.

Es ist daher Aufgabe der Erfindung, ein kostengünstiges, stabiles und einfach handzuhabendes Distanzrohr sowie ein transportgesichertes Haushaltsgerät mit einem solchen Distanzrohr vorzusehen.

Diese Aufgabe wird mit den Merkmalen des Anspruchs 1 bzw. 15 gelöst.

Gemäß Anspruch 1 wird ein Distanzrohr mit einer zumindest teilweise umlaufenden Rohrwand vorgesehen. Zumindest an einem Ende der Rohrwand sind Segmente angeordnet, die aus getrennten Abschnitten des Rohrwandmaterials ausgebildet sind. Die Segmente sind zumindest teilweise zur Rohrachse hin gebogen und/oder gekantet und bilden somit anstelle einer schmalen Rohrwandkante zumindest abschnittsweise eine abgeflachte Anlagefläche. Wird das Distanzrohr beispielsweise als Transportsicherung zwischen einem Gehäuseteil und einem Bottich einer Waschmaschine eingesetzt, so führen die auftretenden Zug-, Druck- oder Biegekräfte an der Auflagefläche zwischen den gebogenen Segmenten und der Bottich- oder Gehäusewandung nicht zu Beschädigungen.

Vorteilhaft ist die Anlagefläche senkrecht oder ungefähr senkrecht zur Rohrachse ausgebildet, so daß bei einer axialen Verspannung der durch das Distanzrohr gegeneinander zu sichernden Elemente die vom Rohrende auf die Gegenfläche ausgeübte Kraft auf einen großen Anlagebereich verteilt wird.

Bei einer weiteren Ausgestaltung sind die Segmente zweifach gebogen und/oder gekantet, so daß sich die Stabilität der Segmente erhöht. Sind die Segmente dabei so gebogen, daß jeweils die Biegebereiche oder Kanten an die Anlagefläche angrenzen, so werden dort scharfkantige Ecken oder Kanten vermieden. Vorteilhaft sind die Segmente an deren Basisfläche, angrenzend zur Rohrwand, zur Rohrachse hin gebogen und/oder gekantet. Da dabei für die Anlagefläche der maximale Durchmesser des Distanzrohrs ausgenutzt wird, wird auch eine große Fläche für die Anlage erreicht. Sind die an die Basis anschließenden Abschnitte der Segmente nochmals gebogen und/oder gekantet, so daß sie von der Rohrachse weg weisen und eine trichterartige Mündung ausbilden, so dient diese trichterartige Mündung beispielsweise als Einführhilfe für einen Schraubbolzen oder dergleichen. Besonders vorteilhaft ist die trichterartige Mündung zum Innern des Distanzrohrs ausgebildet, so daß beispielsweise beim Einführen eines Bolzens vom anderen Ende des Distanzrohrs dieser zur Achse des Distanzrohrs hin zentriert wird.

Weisen die Segmente in ungebogenem oder ungekantetem Zustand eine Taille auf, beispielsweise in Form eines Doppeltrapezes, und sind die Segmente einmal am Basisansatz und im Bereich der Taille gebogen oder gekantet, so bildet vorteilhaft der eine Teil des Segments die Anlagefläche und der andere Teil des Segments bildet die Trichterwandung der trichterartigen Mündung.

Weist das Distanzrohr eine längsverlaufende Trennfuge auf und ist das Distanzrohr in Umfangsrichtung durch zumindest eine ineinander greifende Rastverbindung oder formschlüssige Verbindung an der Trennfuge miteinander verbunden, so wird eine Formstabilität des Distanzrohres auch bei hohem Druck auf dessen Enden gewährleistet.

Zur Herstellung des Distanzrohrs mit den vorgefertigten Segmenten wird besonders vorteilhaft ein Blechstanzteil bearbeitet, bei dem beispielsweise zuerst die Segmente gefalzt und dann der Rundkörper gebogen wird. Dadurch sind die Herstellkosten des Distanzrohrs besonders gering.

Anhand von Figuren wird eine Ausführungsform der Erfindung dargestellt. Es zeigen:
- Fig. 1: eine seitliche Ansicht des Distanzrohrs mit teilweise im Längsquerschnitt dargestellten Bereichen,
- Fig. 2: eine Querschnittsansicht des Distanzrohres von Fig. 1 längs der Schnittrichtung A - A und
- Fig. 3: das Distanzrohr im ungebogenen bzw. ursprünglichen Zustand.

Fig. 1 zeigt ein Distanzrohr in teilweiser Draufsicht und teilweiser Querschnittsansicht längs der Rohrachse. Das Distanzrohr wird zur Transportsicherung als Distanzstück zwischen einer Gehäusewand und einem Bottich einer Waschmaschine eingesetzt. Das Distanzrohr 1 ist aus einem gestanzten Blechstück zur Rohrform gebogen. Die Blechstärke liegt beispielsweise im Bereich von 0,5 bis 2 mm und beträgt beim dargestellten Distanzrohr 1,25 mm. Der Rohrdurchmesser liegt vorzugsweise im Bereich von 10 bis 50 mm und beträgt beim dargestellten Distanzrohr 25 mm.

Nach dem Biegen bilden zwei gegenüberliegende Kanten des gestanzten Blechstückes eine Trennfuge 2 aus, an der das Rohr mittels einer Klammerung 3 geklammert bzw. verbunden ist. Die Klammerung 3 umfaßt eine Ausnehmung 3a, an deren Flanken kurze Vorsprünge ausgebildet sind. Von der anderen Blechkante her greift in diese Ausnehmung 3a ein Vorsprung 3b ein, der eine der Ausnehmung 3a gepaarte Formung aufweist. Aufgrund der kurzen Vorsprünge an den Flanken der Ausnehmung 3a und der taillenartigen Einschnürung des Vorsprungs 3b wird das Distanzrohr an der Trennfuge 2 bei in Umfangsrichtung wirkenden Kräften gesichert. Zusätzlich kann die Trennfuge durch Schweißpunkte entlang der Trennfuge oder an der Klammerung 3 gesichert sein.

An einem Ende des Distanzrohres 1 sind Segmente 4 ausgebildet, die doppelt gefalzt bzw. gebogen sind. Fig. 3 zeigt eine Teildraufsicht auf das ursprünglich ungebogene Blechstanzteil in schematischer Darstellung, aus der die ursprüngliche Form der Segmente 4 ersichtlich ist. Die Segmente 4 weisen eine Basis 5 und ein Kopfende 7 auf. Die Basis 5 geht am Basisansatz 6 in die spätere Rohrwandung über und zwischen der Basis 5 und dem Kopfende 7 ist eine Taille 8 ausgebildet. An der Spitze des Kopfendes 7 sind die Kopfenden bogenförmig abgeschlossen. Der Radius des bogenförmigen Abschlusses ist so gewählt, daß die freien Enden der doppelt gebogenen Segmente 4 in einem ungefähr parallelen Abstand zur Rohrwand stehen, wie dies aus der Ansicht von Fig. 2 zu ersehen ist.

Wie im Querschnitt von Fig. 1 dargestellt, sind die Segmente 4 im Bereich der Taille 8 mit einem ersten Radius R1 um ungefähr 135° gebogen. Der erste Radius R1 beträgt vorzugsweise 0,5 bis 3 mm und beträgt beim dargestellten Distanzrohr 1,8 mm. Am Basisansatz 6 sind die Segmente 4 mit einem zweiten Radius R2 um 90° zum ursprünglichen Blechstück bzw. zur Rohrwand gebogen, so daß die Basis 5 der Segmente 4 mit ihrer äußeren Seite eine Anlagefläche an der Stirnseite des Distanzrohres 1 ausbildet. Der Radius R2 beträgt vorzugsweise 0,75 bis 5 mm und beträgt beim dargestellten Distanzrohr 2 mm. Die ursprüngliche Form der Segmente 4 ist derart ausgebildet, daß nach dem Biegen zwischen den Basen 5 und den Kopfenden 7 jeweils ein einheitlicher Spalt ausgebildet ist. Der Abstand der Spitzen der Kopfenden 7 zur Rohrinnenwand beträgt beispielsweise maximal 2 mm und bei dem in Fig. 1 dargestellten Distanzrohr maximal 0,5 mm, wie dies durch den Abstand d dargestellt ist.

Die Kopfenden 7 bilden im Inneren des Distanzrohres 1 eine trichterförmige Führungsfläche als Einführhilfe zum Einführen eines Bolzens von dem gegenüberliegenden Ende des Distanzrohres. Die Einführhilfe erleichtert beispielsweise das Durchstecken eines Schraubbolzens durch das Distanzrohr 1, wenn der Bolzen durch ein Loch in einer Gehäusewand der Waschmaschine eingeführt werden soll und das Distanzrohr nicht exakt zentriert oder bei der Montage nicht einsichtig ist. Die durch die gebogenen Segmente 4 im Bereich der Taille 8 begrenzte Öffnung 9 hat vorzugsweise einen Durchmesser im Bereich von vorzugsweise 4 bis 15 mm und beträgt beim dargestellten Distanzrohr 1 ungefähr 7 mm.

Ein bevorzugtes Verfahren zur Herstellung des Distanzrohres 1 sieht vor, daß zunächst ein Blechteil mit den Konturen der Segmente 4 und der Ausnehmung 3a bzw. Vorsprünge 3b (falls vorgesehen) ausgestanzt wird. Dann werden die Kopfenden 7 im Bereich der Taille 8 um 100 bis 160°, vorzugsweise ungefähr 135° gebogen. Danach werden die Basen 5 im Bereich des Basisansatzes 6 um 80 bis 100°, vorzugsweise 90°, gebogen. Das Blech mit den bereits gebogenen Segmenten 4 wird dann um die spätere Rohrachse herum gebogen, so daß sich die ursprünglich seitlichen Blechkanten an der Trennfuge 2 gegenüberliegen.

### Bezugszeichenliste

- 1:: Distanzrohr
- 2:: Trennfuge
- 3:: Klammerung
- 3a:: Ausnehmung
- 3b:: Vorsprung
- 4:: Segment
- 5:: Basis
- 6:: Basisansatz
- 7:: Kopfende
- 8:: Taille
- 9:: Öffnung

## Patentansprüche

1. Distanzrohr (1) zur Transportsicherung eines Haushaltsgeräts, wobei das Distanzrohr (1) eine zumindest teilweise umlaufende Rohrwand besitzt; die zumindest an einem Ende segmentweise unterbrochen ist, **dadurch gekennzeichnet, dass** alle Segmente (4) zumindest teilweise zur Rohrachse hin gebogen (R1, R2) und/oder gekantet sind, und die gebogenen und/oder gekanteten Segmente (4) an zumindest einem Rohrende eine Anlagefläche (5) des Distanzrohrs (1) für die Gegenfläche eines der durch das Distanzrohr (1) gegeneinander zu sichernden Elemente ausbilden.

2. Distanzrohr nach Anspruch 1, **dadurch gekennzeichnet, daß** die Anlagefläche senkrecht oder ungefähr senkrecht zur Rohrachse ausgebildet ist.

3. Distanzrohr nach Anspruch 1 oder 2, **dadurch gekennzeichnet, daß** die Segmente (4) zumindest zweifach gebogen (R1, R2) und/oder gekantet sind.

4. Distanzrohr nach Anspruch 1, 2 oder 3, **dadurch gekennzeichnet, daß** die Segmente (4) an deren Basisansatz (6) zur Rohrachse hin gebogen (R2) und/oder gekantet sind.

5. Distanzrohr nach einem der vorhergehenden Ansprüche, **dadurch gekennzeichnet, daß** die Segmente (4) eine Basis (5) und einen Endabschnitt oder einen an die Basis anschließenden Abschnitt (7) aufweisen und die Endabschnitte oder an die Basis anschließenden Abschnitte (7) von der Rohrachse wegweisend ausgebildet sind.

6. Distanzrohr nach Anspruch 5, **dadurch gekennzeichnet, daß** die an die Basis (5) anschließenden Abschnitte (7) der Segmente (4) eine trichterartige Mündung ausbilden.

7. Distanzrohr nach Anspruch 6, **dadurch gekennzeichnet, daß** die trichterartige Mündung im Inneren des Abstandselements (1) ausgebildet ist.

8. Distanzrohr nach Anspruch 6 oder 7, **dadurch gekennzeichnet, daß** die kleinere Öffnung (9) der trichterartigen Mündung an der Stirnseite des Abstandselements (1) und die größere Öffnung im Inneren liegt.

9. Distanzrohr nach einem der vorhergehenden Ansprüche, **dadurch gekennzeichnet, daß** die Segmente (4) in ungebogenem oder ungekantetem Zustand eine Taille (8) aufweisen.

10. Distanzrohr nach Anspruch 9, **dadurch gekennzeichnet, daß** jedes Segment (4) in Form oder ungefähr in Form eines Doppeltrapezes (5, 7) ausgebildet ist.

11. Distanzrohr nach Anspruch 9 oder 10, **dadurch gekennzeichnet, daß** die Segmente (4) am Basisansatz (6) und im Bereich der Taille (8) gekantet und/oder gebogen (R1, R2) sind.

12. Distanzrohr nach einem der vorhergehenden Ansprüche, **gekennzeichnet durch** eine längsverlaufende Trennfuge (2).

13. Distanzrohr nach Anspruch 12, **dadurch gekennzeichnet, daß** angrenzend an die Trennfuge (2) zumindest eine gepaarte, ineinandergreifende Rastverbindung oder formschlüssige Verbindung (3) ausgebildet ist.

14. Distanzrohr nach Anspruch 13, **dadurch gekennzeichnet, daß** zumindest ein erstes und zweites Element (3a, 3b) der Verbindung (3) an der Rohrwand ausgebildet sind, wobei sich die Elemente (3a, 3b) an der Trennfuge (2) paarweise gegenüberliegen.

15. Transportgesichertes Haushaltsgerät, insbesondere Waschmaschine, mit einer Transportsicherung, die zumindest ein Distanzrohr (1) gemäß einem der vorhergehenden Ansprüche umfaßt.

## Claims

1. Spacer tube (1) for transport security of a household apparatus, wherein the spacer tube (1) has an at least partly annular tube wall, which is interrupted in segments at least at one end, **characterised in that** all segments (4) are bent (R1, R2) and/or edged at least partly towards the tube axis, and the bent and/or edged segments (4) form a contact surface (5) of the spacer tube (1) for the counter-surface of one of the elements to be secured with respect to one another by the spacer tube (1) at least at one tube end.

2. Spacer tube according to claim 1, **characterised in that** the contact surface is formed vertically or approximately vertically to the tube axis.

3. Spacer tube according to claim 1 or 2, **characterised in that** the segments (4) are bent (R1, R2) and/or edged at least twice.

4. Spacer tube according to claim 1, 2 or 3, **characterised in that** the segments (4) are bent (R2) and/or edged towards the tube axis on their base attachment (6).

5. Spacer tube according to one of the preceding claims, **characterised in that** the segments (4) have a base (5) and an end section or a section (7) connecting to the base and the end sections or sections (7) connecting to the base are formed pointing away from the tube axis.

6. Spacer tube according to claim 5, **characterised in that** the sections (7) of the segments (4) connecting to the base (5) form a funnel-like orifice.

7. Spacer tube according to claim 6, **characterised in that** the funnel-like orifice is formed in the interior of the spacer element (1).

8. Spacer tube according to claim 6 or 7, **characterised in that** the smaller opening (9) of the funnel-like orifice lies on the end-face side of the spacer element (1) and the larger opening lies in the interior.

9. Spacer tube according to one of the preceding claims, **characterised in that** the segments (4) in the non-bent or non-edged state have a throat (8).

10. Spacer tube according to claim 9, **characterised in that** each segment (4) is designed in the form or approximately in the form of a double trapezium (5, 7).

11. Spacer tube according to claim 9 or 10, **characterised in that** the segments (4) on the base attachment (6) and in the region of the throat (8) are edged and/or bent (R1, R2).

12. Spacer tube according to one of the preceding claims, **characterised by** a longitudinally running separating line (2).

13. Spacer tube according to claim 12, **characterised in that** at least one paired locking connection or positive connection (3) engaging in one another is formed bordering on the separating line (2).

14. Spacer tube according to claim 13, **characterised in that** at least one first and second element (3a, 3b) of the connection (3) are formed on the tube wall, wherein the elements (3a, 3b) are opposite one another in pairs on the separating line (2).

15. Transport-secured household apparatus, in particular washing machine, having transport security which comprises at least one spacer tube (1) according to one of the preceding claims.

## Revendications

1. Tube d'écartement (1) pour sécuriser le transport d'un appareil ménager, le tube d'écartement (1) comportant une paroi tubulaire au moins partiellement périphérique, qui est interrompue par segments au moins à une extrémité, **caractérisé en ce que** tous les segments (4) sont courbés (R1, R2) et/ou pliés au moins en partie vers l'axe du tube, et les segments (4) courbés et/ou pliés forment sur au moins une extrémité du tube une surface d'appui (5) du tube d'écartement (1) pour la surface complémentaire de l'un des éléments à bloquer l'un par rapport à l'autre par le tube d'écartement (1).

2. Tube d'écartement selon la revendication 1, **caractérisé en ce que** la surface d'appui est réalisée perpendiculairement ou à peu près perpendiculairement à l'axe du tube.

3. Tube d'écartement selon la revendication 1 ou 2, **caractérisé en ce que** les segments (4) sont courbés (R1, R2) et/ou pliés au moins deux fois.

4. Tube d'écartement selon la revendication 1, 2 ou 3, **caractérisé en ce que** les segments (4) sont courbés (R2) et/ou pliés vers l'axe du tube au niveau de leur talon de base (6).

5. Tube d'écartement selon l'une quelconque des revendications précédentes, **caractérisé en ce que** les segments (4) comportent une base (5) et une partie d'extrémité ou une partie (7) adjacente à la base et les parties d'extrémité ou parties (7) adjacentes à la base sont réalisées en s'écartant de l'axe du tube.

6. Tube d'écartement selon la revendication 5, **caractérisé en ce que** les parties (7) des segments (4), adjacentes à la base, forment une bouche en forme d'entonnoir.

7. tube d'écartement selon la revendication 6, **caractérisé en ce que** la bouche en forme d'entonnoir est réalisée à l'intérieur de l'élément d'écartement (1).

8. Tube d'écartement selon la revendication 6 ou 7, **caractérisé en ce que** la petite ouverture (9) de la bouche en forme d'entonnoir est située sur la face frontale de l'élément d'écartement (1) et la grande ouverture est située à l'intérieur.

9. Tube d'écartement- selon l'une quelconque des revendications précédentes, **caractérisé en ce que** les segments (4), à l'état non courbé ou non plié, ont un col (8).

10. Tube d'écartement selon la revendication 9, **caractérisé en ce que** chaque segment (4) est réalisé sous forme ou à peu près sous la forme d'un double trapèze (5, 7).

11. Tube d'écartement selon la revendication 9 ou 10, **caractérisé en ce que** les segments (4) sont pliés et/ou courbés (R1, R2) au niveau du talon de base (6) et dans la zone du col (8).

12. Tube d'écartement selon l'une quelconque des revendications précédentes, **caractérisé par** un -joint de séparation (2) orienté dans le sens longitudinal.

13. Tube d'écartement selon la revendication 12, **caractérisé en ce qu'**au moins un assemblage d'arrêt emboîté apparié ou un assemblage par conjugaison de forme (3) apparié est formé de manière adjacente au joint de séparation (2).

14. Tube d'écartement selon la revendication 13, **caractérisé en ce qu'**au moins un premier et un deuxième élément (3a, 3b) de l'assemblage (3) sont réalisés sur la paroi tubulaire, les éléments (3a, 3b) étant situés face à face par paire au niveau du joint de séparation (2).

15. Appareil ménager sécurisé pour le transport, en particulier machine à laver, comportant une sécurité de transport qui comporte au moins un tube d'écartement (1) selon l'une des revendications précédentes.
